# EUROPÄISCHE PATENTSCHRIFT

(11) **EP 2 990 681 B1**
(45) Veröffentlichungstag und Bekanntmachung des Hinweises auf die Patenterteilung: **17.10.2018**
(21) Anmeldenummer: 15174188.1
(22) Anmeldetag: 29.06.2015
(51) Int. Cl.: F16D 28/00, F16D 23/12

(54) **BETÄTIGUNGSEINHEIT FÜR EINE KUPPLUNG SOWIE KRAFTFAHRZEUG**
ACTUATION UNIT FOR A CLUTCH AND MOTOR VEHICLE
UNITE D'ACTIONNEMENT D'EMBRAYAGE ET VEHICULE AUTOMOBILE

(30) Priorität: 04.08.2014 DE 102014215324
(43) Veröffentlichungstag der Anmeldung: 02.03.2016
(60) Teilanmeldung: 17151297.3
(73) Patentinhaber: ZF Friedrichshafen AG, 88046 Friedrichshafen (DE)
(72) Erfinder: Mäder, Fred, 97532 Üchtelhausen (DE); Baumgart, Sebastian, 97705 Burkardroth (DE)

(56) Entgegenhaltungen:
- DE-A1- 4 433 824
- DE-A1- 19 627 980
- DE-A1- 19 700 935
- GB-A- 2 351 130

## Beschreibung

Die Erfindung betrifft eine Betätigungseinheit für eine Kupplung umfassend eine Antriebseinheit, ein Betätigungselement zum Betätigen der Kupplung und ein Getriebe zum Übertragen eines durch die Antriebseinheit erzeugten Drehmomentes auf das Betätigungselement, wobei das Getriebe wenigstens einen Bolzen zum Angreifen am Betätigungselement aufweist wobei der Bolzen wenigstens teilweise mit einer Ummantelung versehen ist.

Aus der DE 100 59 374 A1 geht eine Betätigungseinheit für eine Kupplung hervor, bei der ein Motor eine Schneckenverzahnung antreibt, mittels der ein Segmentzahnrad angetrieben wird. Am Segmentzahnrad befindet sich eine Gelenkaufnahme zur Aufnahme des Gelenkkopfes eines Stößels, mit dem eine Kupplung ausrückbar ist. Weiterhin umfasst die Betätigungseinheit eine Kompensationsfeder zur Verringerung der benötigten Ausrückkräfte.

Darüber hinaus ist es bekannt, derartige Betätigungseinheiten mit einem Verschleißausgleich zu versehen. Bei Kupplungsscheiben tritt nämlich mit zunehmender Benutzung ein Verschleiß derart auf, dass die Dicke der Kupplungsscheibe aufgrund des Materialabtrags abnimmt. Dadurch stellen sich die Membranfederzungen der Membranfeder, die die Anpressplatte einer Kupplungs-Druckplatte gegen die Kupplungsscheibe pressen, im eingerückten Zustand nach außen. Dementsprechend muss die Ausgangsposition des Stößels der Betätigungseinheit, der die Ausrückkraft auf die Kupplungseinheit überträgt, an den zunehmenden Verschleiß und die damit sich ändernde Position der Membranfederzungen angepasst werden. Eine Betätigungseinrichtung mit Verschleißausgleich geht beispielsweise aus der DE 1 525 335 hervor.

Allen bekannten Betätigungseinheiten ist gemeinsam, dass die Drehbewegung eines Aktuators, insbesondere eines Elektromotors, in eine Linearbewegung des Stößels umgewandelt wird.

Im Hinblick auf die Übertragung hoher Ausrückkräfte offenbart DE 10 2012 214 347 A1 die Verwendung einer Schlingfeder als Verschleißausgleichsmittel.

Aus der DE 10 2014 202 422 geht eine Betätigungseinrichtung nach dem Oberbegriff von Anspruch 1 hervor. Um den Kraftübertrag des Getriebes der Betätigungseinheit zu verbessern wird vorgeschlagen, ein Kurvengetriebe zu verwenden. Das Getriebe greift mit einem Bolzen am Stößel als Betätigungselement an.

Dabei besteht das Problem, dass die Verbindung zwischen dem Bolzen und dem Stößel hochbelastet ist, da aufgrund der Rundheit des Bolzens eine hohe Flächenpressung an der Berührlinie zwischen Bolzen und Stößel anliegt und andererseits aufgrund der Gleitreibung des Bolzens am Stößel die Wirkung der Flächenpressung noch vergrößert wird.

Die DE 197 00 935 A1 lehrt eine Betätigungsvorrichtung, bei der eine Kurvenscheibe den Stößel über eine Rolle antreibt.

Ausgehend hiervon ist es Aufgabe der vorliegenden Anmeldung, eine Betätigungseinheit anzugeben, die bei der die Lebensdauer des Betätigungselementes, insbesondere des Stößels wie auch des Bolzens, der Betätigungseinrichtung verbessert ist.

Diese Aufgabe wird durch eine Betätigungseinheit mit den Merkmalen des Anspruchs 1 gelöst. Die dabei vorgesehene Ummantelung hat die Aufgabe, die Reibbelastung bei hoher Hertz'scher Pressung zwischen Bolzen und Stößel zu verringern. Dabei muss der Bolzen nicht vollständig ummantelt sein sondern nur auf der Fläche, die mit dem Stößel in Kontakt kommt. Bevorzugt ist der Bolzen nur auf der Mantelfläche ummantelt, die Stirnfläche oder die Stirnflächen bleiben dabei frei. Es kann aber auch nur ein Teil der Mantelfläche ummantelt sein. Dabei wird ein Bolzen als ein zylindrischer Gegenstand angesehen, sei es als Vollzylinder oder Hohlzylinder. Dabei ist ein Vollzylinder bevorzugt.

Eine Ummantelung kann dabei durch eine spezielle Oberflächenbearbeitung des Bolzens wie auch durch Auftrag von gleitreibungssenkenden Materialien vorgenommen werden.

Vorteilhafterweise ist die Ummantelung aber als Mantelelement ausgebildet. D.h. dass die Ummantelung ein separates Bauteil und unabhängig vom Bolzen ist. Dadurch wird die Gleitreibung bei hoher Hertz'scher Pressung zwischen Bolzen und Stößel bzw. Betätigungselement in eine Gleitbelastung am Bolzen und eine Hertz'sche Pressung am Bolzen aufgeteilt.

Im Folgenden wird der Einfachheit halber zumeist von einem oder dem Bolzen gesprochen. Dies schließt aber nicht aus, dass mehrere Bolzen vorhanden sind. Vielmehr ist es sogar bevorzugt, wenn zwei Bolzen verwendet werden. Dabei kann jeder Bolzen unabhängig von den anderen Bolzen ausgestaltet werden. Es kann also auch nur einer der Bolzen ummantelt sein oder die Bolzen können unterschiedlich ummantelt sein. Bevorzugt sind die Bolzen auf gleiche Art und Weise ummantelt.

Die Ausgestaltung des restlichen Getriebes ist unabhängig von der Ausgestaltung des Bolzens. Bevorzugt weist das Getriebe grundsätzlich einen Aufbau wie aus DE 10 2012 214 347 A1 oder DE 10 2014 202 422 bekannt auf, d.h. mit einem Zahnradsegment, einer Kompensationsfedereinheit und einer Schlingfeder zum Verschleißausgleich. Notwendig ist jedoch lediglich ein Bolzen als Verbindungselement zwischen Getriebe und Betätigungselement, inwieweit das Drehmoment bis zum Bolzen gelangt ist erst einmal unerheblich. Dieser Bolzen ist ummantelt, um die Belastung an der Berührstelle zwischen dem Bolzen und dem Stößel zu verringern.

Vorteilhafterweise kann das Mantelelement als hohlzylindrische Rolle ausgebildet sein. Bevorzugt ist die Rolle aus Stahl. Dann kann die Rolle am auch als Stößel bezeichneten Betätigungselement abrollen, während der Bolzen an der Rolle reibt. Zwar liegt am Betätigungselement immer noch die gleiche Flächenpressung an wie vorher, allerdings wirkt nun Rollreibungskraft, während die Gleitreibung zwischen Bolzen und Rolle vorhanden ist. Dadurch kann der Verschleiß an Stößel und Bolzen erheblich minimiert werden.

Vorzugsweise kann das Mantelelement als Gleitlager ausgebildet sein. Das Gleitlager kann als Rolle mit gleitreibungsverringerter Innenwand angesehen werden. Bevorzugt besteht das Gleitlager aus einer äußeren Rolle und einer in die Rolle eingepressten Glacierbuchse. Mit diesem Aufbau fällt die Gleitreibungskraft zwischen Bolzen und Mantelelement geringer aus als wenn das Mantelelement als Stahlrolle ausgebildet ist.

Bevorzugt ist der wenigstens eine Bolzen beidseitig abgestützt. Der Stößel setzt der Bewegung Widerstand entgegen, weshalb auf den Bolzen Hebelkräfte wirken. Bei einer auch nur leichten Schrägstellung des Bolzens wirken die Kräfte zwischen Bolzen und Stößel bzw. Rolle und Stößel nur noch punktuell, was den Verschleiß des Stößels erhöht. Daher kann der Bolzen an beiden Enden abgestützt werden, um ein Abknicken oder Schrägstehen des Bolzens zu verhindern.

Erfindungsgemäß ist der Bolzen an einem flächigen Trägerelement befestigt.

Vorteilhafterweise können an einem Ende einer Welle des Getriebes zwei Trägerteile, insbesondere Haltebleche, zum beidseitigen Stützen des wenigstens einen Bolzens fixiert sein. Das Getriebe ist mehrteilig aufgebaut, wie weiter unten detaillierter gezeigt wird. Betrachtet man nur den Bereich am Betätigungselement so ist eine Welle vorhanden, an der ein mehr oder weniger flächiges Element befestigt ist. An einem derartigen Trägerelement ist der Bolzen befestigt. Der Bolzen ist gegenüber der Drehachse der Welle in radialer Richtung versetzt, sodass der Bolzen aufgrund der Drehung der Welle kreisförmig gedreht wird. Das Trägerelement ist vorzugsweise ein an der Welle fixiertes Halteblech.
Sieht man beabstandet zu diesem Trägerelement ein zweites Trägerelement vor, das ebenfalls an der Welle fixiert ist, so kann der Bolzen an seinen Enden jeweils durch ein Trägerelement abgestützt werden. Dadurch wird ein Schrägstehen und Hebelkräfte auf den Bolzen vermieden.
Vorteilhafterweise kann der wenigstens eine Bolzen am Getriebe aufgetulpt sein. Er ist also an wenigsten einem Ende aufgeweitet. Insbesondere ist der Bolzen an wenigstens einem Trägerelement aufgetulpt. Alternativ kann der Bolzen angeschweißt sein.
Vorzugsweise kann der wenigstens eine Bolzen an einem Ende einen Kopf aufweisen, der ein Axialanschlag für das Mantelelement ist. Dieses Ende mit Kopf wird dann nicht aufgetulpt. Alternativ kann der Kopf als Anschlag gegen das zweite Trägerelement dienen.

Vorzugsweise kann das Getriebe einen Verschleißausgleichsmechanismus umfassen, durch den die Einrückposition des Betätigungselementes an den Verschleißzustand der Kupplung anpassbar ist. Bevorzugt kann sich der Hebelarm zwischen Getriebe und Betätigungselement mit Wechsel der Einrückposition aufgrund einer Verschleißausgleichsanpassung vergrößert. Dabei wird als Einrückposition die Position des Betätigungselementes angesehen, bei der die Kupplung eingerückt ist. Es handelt sich also um die Grund- oder Ruheposition, aus der das Betätigungselement zum Ausrücken startet. Bei Verschleiß stellen sich wie beschrieben die Membranfederzungen der Kupplung auf, der Kontaktpunkt wandert damit von der Kupplung weg. In diese Richtung muss mit zunehmendem Verschleiß auch die Einrückposition des Betätigungselementes verschoben werden. Zusätzlich zu dieser Verschiebung des Betätigungselementes ist nun vorgesehen, dass sich der Hebelarm zwischen Übertragungseinheit und Betätigungselement vergrößert, weshalb auch die übertragene Kraft größer wird. Damit wird ausgeglichen, dass sich nicht nur der Weg zum Ausrücken bei Verschleiß wandelt, sondern auch die aufzubringende Kraft, die mit zunehmendem Verschleiß größer wird. In der Folge kann die Antriebseinheit, die bislang die mit zunehmendem Verschleiß auftretenden Kräfte aufbringen musste, mit weniger Leistung ausgestattet werden.

Zwischen dem Getriebe und dem Betätigungselement liegt immer ein Hebelarm an, da die Drehbewegung der Antriebseinheit bzw. des Getriebes in eine mehr oder weniger lineare Bewegung des Betätigungselementes zu überführen ist. Dieser Hebelarm ändert sich während der Drehbewegung des Getriebes, da sich dabei der Angriffspunkt der Übertragungseinheit am Betätigungselement vom Drehpunkt des Getriebes entfernt. Im Falle des Segmentzahnrades dreht sich das den Stößel antreibende Kugelgelenk aus einer Position unterhalb des Drehpunktes mit maximalem Hebelarm Richtung Kupplung und nähert sich dabei der Drehachse des Segmentzahnrades, wodurch der Hebelarm geringer wird. Bei gleichbleibender Leistung der Antriebseinheit sinkt dabei die übertragene Kraft.

Ob die Kraft im Rahmen der Ausrückbewegung des Betätigungselementes steigt oder fällt ist primär nicht von Bedeutung. Entscheidend ist, dass mit zunehmendem Verschleiß die Kraft an der Ausrückposition ansteigt. Dies ist realisiert durch den größer werdenden Hebelarm.

Vorteilhafterweise kann der Abstand zwischen der Drehachse des Getriebes oder eines Verbindungselementes des Getriebes und der Längsachse des Betätigungselementes während der Drehbewegung des Getriebes im Wesentlichen konstant gehalten werden. Dadurch wird das Betätigungselement vollkommen linear bewegt, wodurch das Gehäuse im der Kupplung zugwandten Abschnitt kompakter gebaut werden kann, da der Stößel bzw. das Betätigungselement keine Auf- und Abbewegung mehr durchführt. Dadurch, dass das Betätigungselement eine Linearbewegung durchführt, ist weiterhin die Reibung zwischen dem Betätigungselement und der Kupplung bzw. dem Ausrücklager, an dem das Betätigungselement angreift, verringert. Das Verbindungselement ist ein Teil des Getriebes und zwar derjenige, der mit dem Betätigungselement in Eingriff steht. In einer Ausgestaltung ist es aus einem Trägerelement und wenigstens einem Bolzen ausgebaut. In einer bevorzugten Variante umfasst es zwei Trägerelemente und zwei Bolzen.

Vorzugsweise kann das Getriebe das Betätigungselement an einer Angriffsposition angreifen, wobei die Angriffsposition während der Drehbewegung des Getriebes veränderbar ist. Bei bekannten Betätigungseinheiten wie oben beschrieben nimmt eine am Schneckenrad befestigte Gelenkpfanne den Stößel auf. Die Angriffsposition des Verbindungselementes ist damit der Gelenkkopf des Stößels, der sich zwar in der Gelenkpfanne während der Drehbewegung des Schneckenrades dreht, die Gelenkpfanne aber nicht verlässt. Im Gegensatz dazu ist in Weiterbildung der Erfindung vorgesehen, dass die Angriffsposition des Verbindungselementes bzw. des Bolzens am Betätigungselement während der Drehbewegung des Getriebes und damit des Bolzens verändert wird. Dies bedeutet, dass das am Betätigungselement angreifende Teil des Verbindungselementes, nämlich der Bolzen, seine Relativposition zum Betätigungselement verändert.

Das Getriebe weist wie beschrieben einen Verschleißausgleichmechanismus auf, durch den die Grundposition des Betätigungselementes an den Verschleißzustand der Kupplung anpassbar ist. Die beschriebenen Vorteile betreffend die Linearbewegung des Betätigungselementes sind unabhängig vom Vorhandensein eines Verschleißausgleichmechanismus. Dieser sorgt jedoch dafür, dass die Grund- bzw. Ausgangsposition des Betätigungselementes an den Verschleißzustand der Kupplung angepasst wird. Wie oben bereits beschrieben, verlagern sich die Membranfederzungen der Kupplung aufgrund des Verschleißes der Kupplungsscheibe im eingerückten Zustand nach außen, das heißt von der Kupplungsscheibe weg. Die Grundposition des Betätigungselementes, das ist dementsprechend die Position, in der das Betätigungselement im eingerückten Zustand über einen Ausrückhebel oder eine Ausrückgabel am Ausrücklager der Kupplung angreift, muss also derart angepasst werden, dass sich die Grundposition oder Einrückposition des Betätigungselementes mit zunehmendem Verschleiß von der Kupplungsscheibe entfernt. Hierzu dient ein Verschleißausgleichmechanismus.

Vorteilhafterweise kann das Verbindungselement scheibenförmig ausgebildet sein und auf der Seite des Betätigungselementes wenigstens einen Bolzen aufweisen. Dadurch wird die Aufgabenverteilung in Bezug auf die wechselseitige Aufnahme vertauscht. Aufgrund der zylindrischen Ausgestaltung weist die Mantelfläche des Bolzens keinerlei Kanten oder Ecken auf. Dadurch ist die Ummantelung erleichtert.

Erfindungsgemäß sind zwei Bolzen vorgesehen, die von der Drehachse des Trägerelementes bzw. der Übertragungseinheit unterschiedlich beabstandet sind. Das Verbindungselement als Teil des Getriebes hat zumeist dieselbe Drehachse wie das Getriebe selbst. Insbesondere ist das Verbindungselement mit einer Welle des Getriebes verbunden, die die Drehachse vorgibt. Daher kann man sich sowohl auf die Drehachse des Verbindungselementes oder Trägerelementes wie auch die des Getriebes beziehen, ohne dass technisch ein Unterschied entsteht. Bevorzugt ist der beim Ausrücken zuerst angreifende Bolzen näher an der Drehachse gelagert als der zweite Bolzen. Bezogen auf die Einrückposition im Neuzustand der Kupplung ist der zuerst angreifende Bolzen normalerweise der in Drehrichtung kupplungsseitige Bolzen. Beim Wechsel zum zweiten Bolzen steigt dabei automatisch der Hebelarm.

Vorteilhafterweise kann das Betätigungselement wenigstens eine Ausnehmung zur zumindest zeitweisen Aufnahme eines Bolzens des Verbindungselementes des getriebes aufweisen. Die Ausnehmung kann das Betätigungselement auf gesamter Breite beaufschlagen, die Ausnehmung kann aber auch wie ein Sackloch ausgebildet sein, das heißt nur in einer Tiefe in das Betätigungselement eindringen, die geringer ist, als die Breite des Betätigungselementes. Dies bedeutet aber nicht, dass die Grundfläche der Ausnehmung kreisförmig sein soll oder sein muss.

Vielmehr ist vorzugsweise vorgesehen, dass die Ausnehmung in Form eines Langlochs ausgebildet ist. Alternativ kann die Ausnehmung in Form eines zu einer Seite offenen Langlochs ausgebildet sein. Diese Ausgestaltung ermöglicht, dass der Bolzen des Verbindungselementes in der Ausnehmung verschiebbar ist, wodurch eine Relativbewegung des Bolzens im Vergleich zum Betätigungselement ermöglicht ist. Diese Ausgestaltung der Verbindung des Verbindungselementes mit dem Betätigungselement ermöglicht auf einfache Art und Weise, dass das Betätigungselement linear bewegt wird. Die Bewegungsanteile senkrecht zur Richtung der Linearbewegung werden dann durch die Verschiebung des Bolzens in der Ausnehmung abgefangen.

Alternativ ist es auch möglich, dass die Ausnehmung einen kreisförmigen Querschnitt aufweist und der Bolzen am Verbindungselement verschiebbar befestigt ist. Dabei ist denkbar, dass der Bolzen einen Hinterschnitt aufweist, der in einer am Verbindungselement vorhandenen Schiene verschiebbar fixiert ist. Mit der Ausgestaltung der Ausnehmung als Langloch und der dementsprechenden Möglichkeit, den Bolzen starr am Verbindungselement zu fixieren oder diese auch einstückig auszubilden ist aber aufgrund der Einfachheit in der Herstellung bevorzugt.

Vorteilhafterweise kann die Längsrichtung der Ausnehmung senkrecht zur Längsrichtung des Betätigungselementes angeordnet sein. Aufgrund dieser Ausgestaltung können, wie bereits beschrieben, alle Bewegungen des Bolzens senkrecht zur Richtung der Linearbewegung des Betätigungselementes aufgefangen werden, so dass eine Bewegbarkeit des Betätigungselementes, die nicht in der Richtung der Linearbewegung liegt, nicht mehr nötig ist. Dadurch kann wie beschrieben, der Bauraum der Betätigungseinheit dahin gehend verringert werden, dass das Gehäuse im Bereich des Betätigungselementes einen geringeren Durchmesser aufweisen kann. Vorteilhafterweise kann das Betätigungselement eine ringförmige Versteifung aufweisen, die senkrecht zur Drehachse des Verbindungselementes des Getriebes angeordnet ist. Da die Betätigungseinheit eine oder mehr Ausnehmungen aufweist, die insbesondere auch noch länglich ausgebildet sind, kann die Steifigkeit des Betätigungselementes insbesondere bei Druckbeaufschlagung in Mitleidenschaft gezogen werden. Diese Steifigkeit kann durch das Vorsehen der Versteifung wieder erhöht werden. Die Versteifung ist ringförmig, damit die Bolzen des Verbindungselementes auch nach Austritt der Bolzen aus den Langlöchern bzw. Ausnehmungen frei bewegt werden können.

Vorteilhafterweise ist bei Vorhandensein wenigstens zweier Ausnehmungen die Länge der Ausnehmungen in Abhängigkeit des Winkelabstandes der Bolzen des Verbindungselementes festgelegt. Die Festlegung kann derart erfolgen, dass zu jedem Punkt der Drehbewegung des Verbindungselementes immer ein Bolzen am Betätigungselement angreift. Ansonsten kann es vorkommen, dass die Vorsprünge mit den Ausnehmungen verklemmen.

Alternativ kann das Betätigungselement wenigstens einen Finger umfassen, der mit dem Bolzen des Verbindungselementes in Eingriff steht. Dabei greift jeweils ein Bolzen an einem Finger an. Bevorzugt weist das Betätigungselement somit zwei Finger auf. Die Finger sind bevorzugt senkrecht im Vergleich zu den Lagerabschnitten des Betätigungselementes angeordnet.

Vorteilhafterweise kann das Verbindungselement einen Mitnehmerabschnitt mit einer zylindrischen Form besitzen und eine Schlingfeder mit mehreren Wicklungen um die Außenseite gebunden sein. Die Schlingfeder kann durch einen Anschlag derart festgezogen werden, dass sie das Verbindungselement in Ausrückrichtung beaufschlagt, beim Einrücken am Ende der Drehbewegung aber Spiel lässt, so dass das Verbindungselement im Vergleich zur Antriebseinheit verdreht werden kann, wodurch die Grundposition des Verbindungselementes an einen Verschleiß der Kupplung angepasst wird. Die Bolzen sind am Mitnehmerabschnitt befestigt. Alternativ umfasst das Verbindungselement einen Mitnehmerabschnitt, wenigstens ein Trägerelement und am Trägerelement befestigte Bolzen.

Diesbezüglich ist weiterhin vorteilhaft vorgesehen, dass das Verbindungselement in einem Zahnradsegment gelagert ist, wobei das Zahnradsegment die gleiche Drehachse aufweist, wie das Verbindungselement. Mit der Schlingfeder ist es dabei möglich, die Relativposition des Verbindungselementes zum Zahnradsegment zu verändern, so dass sich das Zahnradsegment und das Verbindungselement nicht fest miteinander drehen müssen bzw. das Zahnradsegment und das Verbindungselement nicht miteinander fixiert sein müssen.

In einer alternativen Ausgestaltung ist es möglich, dass das Verbindungselement selbst als Zahnradsegment ausgestaltet ist. Das heißt, dass sich auf der Außenseite des Verbindungselementes derartige Rillen, bzw. Vertiefungen befinden, dass das Verbindungselement mit einem Schneckentrieb antreibbar ist.

Vorzugsweise kann das Getriebe eine Kompensationsfedereinheit aufweisen, die am Zahnradsegment oder in der alternativen Ausgestaltung am Verbindungselement angreift. Mit dieser Kompensationfedereinheit, die vorzugsweise eine Federführung, ein Gelenklager und die Kompensationsfeder umfasst, ist es möglich, die Leistung der Antriebseinheit zu minimieren. Die Kompensationsfedereinheit bildet dabei den Gegenpart zur Membranfeder, die abgesehen von geringfügigen Unterschieden, zur Sicherung einer Vorzugsposition mit betragsmäßig gleich großen aber entgegengesetzten Drehmomenten auf das Verbindungselement einwirken. Daher muss der die Antriebseinheit nur noch sehr geringer Drehmomente übertragen, um ein Ausrücken oder Einrücken der Kupplung zu bewirken. Ohne Kompensationsfedereinheit müsste die Antriebseinheit ansonsten das gesamte Drehmoment zum Ausrücken der Kupplung bereitstellen, was aus Kostengründen nachteilig ist.

Daneben betrifft die Erfindung auch ein Kraftfahrzeug mit einer Betätigungseinheit wie oben beschrieben.

Weitere Vorteile, Merkmale und Einzelheiten ergeben sich aus den im Folgenden beschriebenen Ausführungsbeispielen und Figuren.

Dabei zeigen:
Figur 1 ein Betätigungselement als Explosionszeichnung,
Figur 2 ein Zahnradsegment,
Figur 3 einen Mitnehmer,
Figur 4 einen Stößel,
Figur 5 eine Betätigungseinheit in Grundposition,
Figur 6 eine in Betätigungsrichtung bewegte Betätigungseinheit,
Figur 7 eine Betätigungseinheit in Grundposition bei einer verschlissenen Kupplung,
Figur 8 eine in Betätigungsrichtung bewegte Betätigungseinheit bei einer verschlissenen Kupplung,
Figur 9 eine Ausrückkraftkennlinie einer Kupplung,
Figur 10 eine Kennlinie des in den Mitnehmer eingeleiteten Drehmomentes,
Figur 11 eine Kennlinie des Kompensationsmomentes,
Figur 12 eine Kennlinie der Länge des Hebelarmes,
Figur 13 den Mitnehmer in einer zweiten Ausgestaltung,
Figur 14 eine Betätigungseinrichtung in Seitenansicht,
Figur 15 einen Getriebeabschnitt in perspektivischer Ansicht,
Figur 16 eine Betätigungseinrichtung in perspektivischer Ansicht, und
Figur 17 eine Bolzenlagerung im Querschnitt.

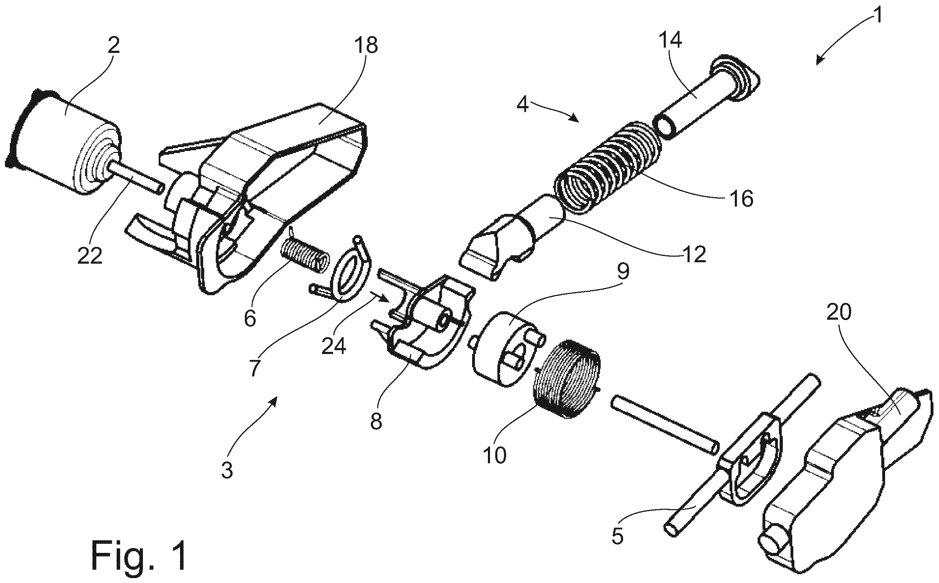

Figur 1 zeigt eine Betätigungseinheit 1 mit einem Elektromotor 2 als Antriebseinheit, einem Getriebe 3, eine Federkompensationseinheit 4 und einem Stößel 5 als Betätigungselement.

Das Getriebe 3 umfasst eine Vorlastfeder 6, eine Anschlagfeder 7, ein Zahnradsegment 8, einen Mitnehmer 9 als Verbindungselement und eine Schlingfeder 10. Die Kompensationsfedereinheit 4 weist ein Gelenklager 12, eine Federführung 14 und eine Kompensationsfeder 16 auf.

Weiterhin weist die Betätigungseinheit 1 ein Gehäuse 18 zur Aufnahme der Bauteile des Getriebes 3 wie auch der Kompensationsfedereinheit 4 sowie des Stößels 5 auf; das Gehäuse 18 ist mit einem Deckel 20 verschlossen. Im Folgenden wird die Funktionsweise der Betätigungseinheit 1 für eine gedrückte Kupplung beschrieben. Die Betätigungseinheit 1 kann jedoch durch Vornahme von Modifikationen auch für eine gezogene Kupplung eingesetzt werden. Die Modifikationen betreffen dabei die Ansteuerung des Elektromotors 2 sowie die Ausgestaltung des Stößels 5. Diese Modifikationen sind grundsätzlich bekannt und bedürfen daher keiner weiteren Erläuterung.

Die Funktionsweise der Betätigungseinheit 1 ist für eine gedrückte Kupplung wie folgt:
Die Grund- oder Ausgangsposition des Stößels 5 ist derart, dass er im eingerückten Zustand der Kupplung an der Kontaktposition zur Ausrückeinheit anliegt. In dieser Position wird der Stößel 5 von der Kompensationsfedereinheit 4 fixiert, da diese so gelagert ist, dass sie das Zahnradsegment in einer Einkuppelposition vorbelastet. Wenn im Folgenden von einer Einkuppel- oder Auskuppelposition die Rede ist, bedeutet dies, dass die Betätigungseinheit 1 so eingestellt ist, dass sich die Kupplung im eingekuppelten oder ausgekuppelten Zustand befindet. Die Einkupplung oder Auskupplung bezieht sich also auf den Zustand der Kupplung und nicht auf die Position der Teile der Betätigungseinheit 1 an sich. Analog werden die Begriffe Einrück- und Ausrückposition verwendet.

Zum Auskuppeln erhält der Elektromotor 2 ein Signal, woraufhin dieser um einen vorgegebenen Umfangswinkel verdreht wird. Dabei kämmt die Stirnradverzahnung 22 mit der Außenseite des Zahnradsegmentes 8 und überträgt auf dieses ein Drehmoment. Das Drehmoment, dass der Elektromotor aufbringt, ist ausreichend um die durch die Kompensationsfedereinheit 4 bzw. der Kompensationsfeder 16 aufgebrachte Kraft zu überwinden. Da die Kompensationsfedereinheit 4 bzw. das Gelenklager 12 nahe bei der Drehachse 24 des Zahnradsegments 8 angreift, ist das darauf zu bringende Drehmoment nicht übermäßig groß. Nachdem die Kompensationsfedereinheit 4 bzw. deren Angriffspunkt am Zahnradsegment 8 über die Drehachse 24 gedreht wurde, unterstützt die Kompensationsfedereinheit 4 die Ausrückbewegung. Durch die Drehung des Zahnradsegmentes 8 wird die Schlingfeder 10, deren Enden jeweils an einem Anschlag des Zahnradsegmentes 8 aufliegen, zusammen gezogen und in reibschlüssige Verbindung mit dem Mitnehmer 9 gebracht. Dabei umschlingen die Windungen der Schlingfeder 10 die Außenseite des Mitnehmers 9, wobei zwischen der Außenseite des Mitnehmers 9 und der Innenseite des Zahnradsegmentes 8 ein genügender Abstand verbleibt, so dass in diesem Zwischenraum die Schlingfeder genügend Spiel besitzt, um beim Einkuppeln die Umschlingung wieder lösen zu können, in dem durch Aufweitung des Durchmessers der Reibschluss zum Mitnehmer 9 unterbrochen wird. Durch die richtige Auslegung der Anschläge des Zahnradsegmentes 8 und der Schlingfeder kann so auch ein Verschleißausgleichmechanismus realisiert werden.

Im Folgenden werden das Zahnradsegment 8, der Mitnehmer 9 und die Schlingfeder 10 sowie der Stößel 5 näher beschrieben.

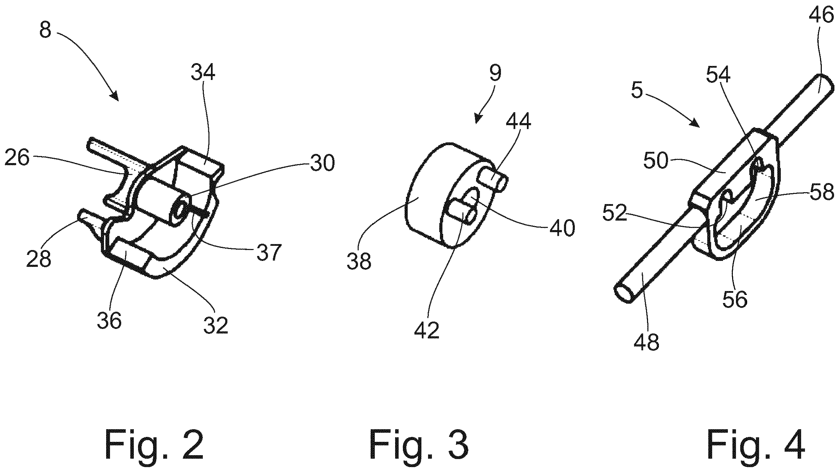

Figur 2 zeigt das Zahnradsegment 8, das elektromotorseitig zwei Anschläge 26 und 28 für die Anschlagfeder 7 besitzt. Stößelseitig befindet sich dagegen ein Lagerbolzen 30 sowie eine segmentierte Ringwandung 32. Der Lagerbolzen 30 ist zylindrisch geformt, so dass der Mitnehmer 9 auf dem Lagerbolzen 30 drehbar gelagert werden kann. Auf der Außenseite weist die Ringwandung 32 eine Stirn-Verzahnung auf, die mit der Stirnradverzahnung 22 des Elektromotors 2 kämmt. Auf der Innenseite ist die Ringwandung 32 glatt ausgebildet. Die seitlichen Enden 34 und 36 der Ringwandung 32 begrenzen diese. Die Schlingfeder 10 sitzt mit einem Ende in einer Nut 37 in der Ringwandung 32, das andere Ende ist grundsätzlich frei drehbar. Die Schlingfeder 10 weist eine Vorspannung gegenüber dem Mitnehmer 9 auf und nimmt diesen mit. Zum Entsperren und Verschleißnachstellen entriegelt das zweite Ende der Schlingfeder 10 in der Grundstellung gegen die Gehäusewandung des Gehäuses 18.

Figur 3 zeigt den Mitnehmer 9, der einen zylindrischen Grundkörper 38 mit einer Ausnehmung 40 aufweist. Bevorzugt durchgreift die Ausnehmung 40 den Grundkörper 38 auf gesamter Länge. Die Ausnehmung 40 legt aufgrund der Lagerung des Mitnehmers 9 am Lagerbolzen 30 die Drehachse des Mitnehmers 9 fest. Stößelseitig besitzt der Mitnehmer 9 zwei Antriebsbolzen 42 und 44. Diese stehen in Eingriff mit entsprechenden Ausnehmungen des Stößels 5, der im Folgenden beschrieben ist.

Figur 4 zeigt einen Stößel 5 in einer perspektivischen Ansicht. Dieser hat zwei Lagerabschnitte 46 und 48 sowie einen Mittelabschnitt 50. Die Lagerabschnitte 46 und 48 sind bevorzugt zylindrisch ausgebildet, sie können jedoch aufgrund der ausschließlichen Linearbewegung des Stößels 5 auch eine andere Grundform als die eines Kreises aufweisen. Beispielsweise können die Lagerabschnitte 46 und 48 auch als Quader ausgebildet sein und einen rechteckigen oder quadratischen Querschnitt besitzen. Die Länge der Lagerabschnitte 46 und 48 ist bevorzugt gleich groß, jedoch können die Lagerabschnitte 46 und 48 auch unterschiedliche Längen aufweisen.

Der Mittelabschnitt 50 besitzt zwei u-förmige Ausnehmungen 52 und 54, die in eine darunter liegende großräumige Ausnehmung 56 münden. Dabei ist mit "darunter liegend" lediglich die Abbildung gemäß Figur 4 beschrieben, selbstverständlich kann die Ausnehmung 56 in Abhängigkeit der Einbaulage der Betätigungseinheit 1 auch neben oder über den Ausnehmungen 52 und 54 liegen. Die Ausnehmung 56 wird auf beiden Seiten und der Unterseite durch einen ringförmigen Versteifungsabschnitt 58 begrenzt. Dabei sind die Ausnehmungen 52 und 54 mit besonderem Vorteil zwischen dem Lagerabschnitt 46 und dem Lagerabschnitt 48 angeordnet, so dass der Kraftübertrag vom Mitnehmer 9 auf den Stößel 5 an einer Fläche erfolgt, die in weiterer Verlängerung durch die Lagerabschnitte 46 und 48 abgedeckt ist. Dadurch ist der Kraftübertrag dahingehend verbessert, dass die Kraftübertragung in der gleichen Ebene liegt, wie die Kraftübertragung von Stößel auf den Ausrücker, weshalb Querkräfte vermieden werden und so die Kraftübertragung optimiert ist. Der Versteifungsabschnitt 58 ist ringförmig, um Bewegungsfreiheit für die Antriebsbolzen 42 bzw. 44 zu lassen. Wie in den folgenden Figuren noch gezeigt wird, ist diese Bewegungsfreiheit erforderlich, damit immer nur ein Antriebsbolzen den Stößel 5 antreibt.

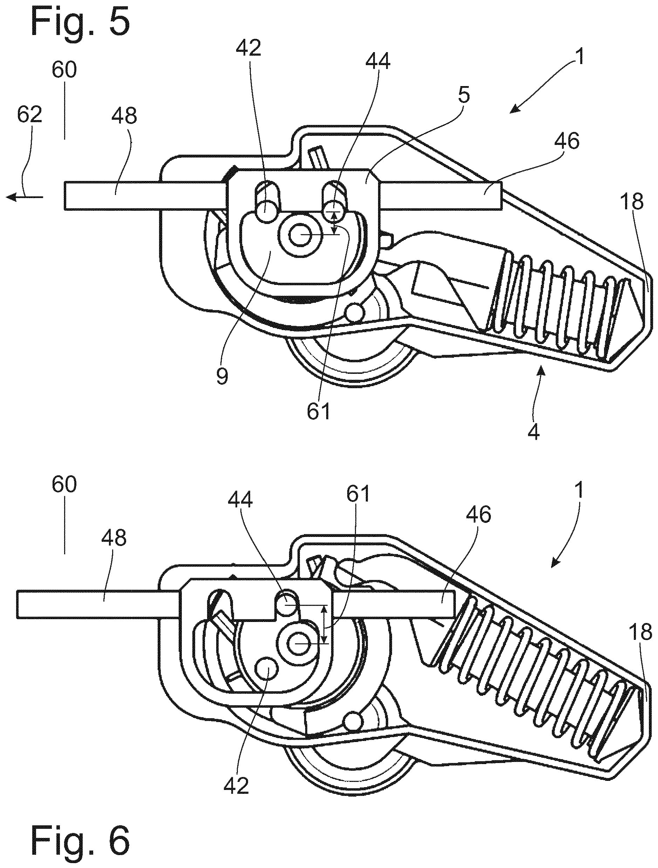

Figur 5 zeigt die Betätigungseinheit 1 in Grundposition, das heißt, dass die Kupplung eingerückt ist. Die Einrück- oder Grundposition für eine Kupplung im Neuzustand wird dabei über die Markierung 60 angezeigt. Der Pfeil 62 gibt die Richtung an, in der der Stößel 5 zu bewegen ist, um die Kupplung auszukuppeln. Der Hebelarm 61 zwischen der Drehachse 63 der Übertragungseinheit 3 bzw. des Mitnehmers 9 und dem Angriffspunkt 65 der Übertragungseinheit 3 am Stößel 5 ist ebenfalls ersichtlich.

Figur 6 zeigt die Betätigungseinheit gemäß Figur 5, wobei der Stößel in Betätigungsrichtung bewegt wurde. Dementsprechend ragt der Lagerabschnitt 48 über die Markierung 60 hinaus, während das Ende des Lagerabschnitts 46 innerhalb des Gehäuses 18 liegt und nicht mehr teilweise außerhalb. Durch weiteren Vergleich der Figuren 5 und 6 kann man erkennen, dass im Neuzustand der Kupplung, auf den ebenfalls Figur 6 bezogen ist, im Wesentlichen der Antriebsbolzen 44 den Stößel 5 antreibt. Der Antriebsbolzen 42 bewegt sich dagegen frei in der Ausnehmung 58. Diese Endposition kann auch als Ausrückposition oder Betriebsposition bezeichnet werden. Um von dieser Betriebsposition wieder in die Grundposition zurück zu gelangen, wird der Elektromotor 2 in Gegenrichtung bewegt. Die Kupplung übt sowieso einen Druck entgegen der Betätigungsrichtung 62 aus, gegen diese Kraft arbeitet und damit in Betätigungsrichtung die Kompensationsfeder 16. Der Elektromotor 2 muss daher nur ein geringes Drehmoment aufbieten, um die Betätigungseinheit 1 von der Betätigungsposition in die Grundposition zurückzuführen. Dabei hat sich der Hebelarm 61 vergrößert, was aber unabhängig von einem Verschleißausgleich geschah, weshalb sich der Hebelarm 61 in der Einrückposition, wie sie in Figur 5 zu sehen ist, nicht ändert.

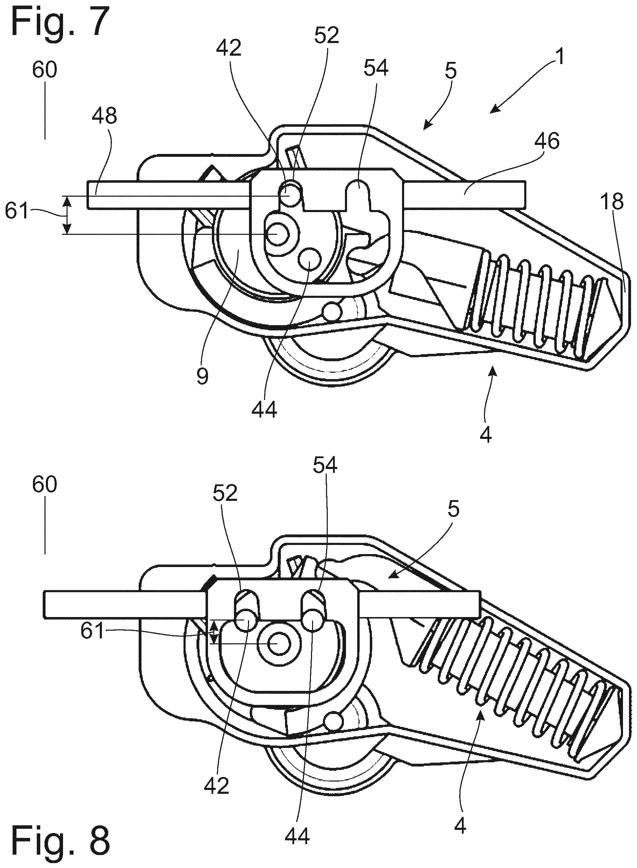

Figur 7 zeigt eine Betätigungseinheit 1 in Grundposition bzw. Einrückposition für eine Kupplung mit Verschleiß. Wie bereits beschrieben, führt der Verschleiß der Kupplungsscheibe dazu, dass in der Einrückposition die Membranfederzungen weiter nach außen gestellt werden. Dementsprechend muss der Angriffspunkt der Betätigungseinheit 1 weiter von der Kupplungsscheibe entfernt liegen, was sich dadurch zeigt, dass der Stößel 5 in der Einrückposition bei Verschleiß weiter in das Gehäuse 18 gerückt ist. Dementsprechend erreicht der Lagerabschnitt 48 die Markierung 60 nicht. Dieser Wechsel der Einrückposition geht mit einer Verdrehung der Ausgangsposition und des Mitnehmers 9 einher. Dadurch ist zu Beginn der Ausrückbewegung nunmehr der Antriebsbolzen 42 mit dem Stößel 5 bzw. der Ausnehmung 52 in Eingriff. Durch Verdrehen des Mitnehmers 9 entgegen dem Uhrzeigersinn wird der Stößel in Betätigungsrichtung 62 verschoben. Erst der Wechsel der Einrückposition des Mitnehmers 9 verändert den Hebelarm 61 in der Einrückposition. Der Hebelarm 61 in der Einrückposition ist mit zunehmendem Verschleiß größer geworden.

Figur 8 zeigt die Betätigungseinheit 1 gemäß Figur 7 in Betätigungsposition. Der Lagerabschnitt 48 erreicht dabei gerade noch die Markierung 60 und entspricht damit der in Figur 5 als Grundposition gezeigten Position des Stößels 5. Jedoch ist im Unterschied zu Figur 5 die Kompensationsfedereinheit 4 ausgefahren.

Die Anordnung der Antriebsbolzen 42 und 44 gemäß Grundposition und Betriebsposition ist dabei relativ willkürlich, wesentlich ist lediglich, dass entweder der Antriebsbolzen 42 oder der Antriebsbolzen 44 mit einer der Ausnehmungen in Verbindung steht. Eine Ausnahme gibt es lediglich für die in den Figuren 5 und 8 gezeigte Position, bei der der Antriebsbolzen 42 gerade noch und der Antriebsbolzen 44 gerade erst mit der jeweiligen Ausnehmung 52 bzw. 54 in Eingriff steht. Stünden die beiden Antriebsbolzen 42 und 44 aber längere Zeit gleichzeitig mit dem Stößel 5 in Wirkverbindung, so würde sich der Mitnehmer 9 über die Antriebsbolzen 42 und 44 mit dem Stößel 5 verkeilen. Das heißt, dass nur bei Übergabe der Antriebsleistung von einem Antriebsbolzen auf den nächsten ein gleichzeitiger Angriff von zwei Antriebsbolzen vorhanden ist.

Die Figuren 5 bis 8 zeigen eine bevorzugte Ausgestaltung mit zwei Antriebsbolzen 42 und 44 und zwei Ausnehmungen 52 und 54. Es ist jedoch möglich, die Anzahl der Antriebsbolzen und damit den Verdrehwinkel des Mitnehmers zu erhöhen. Die Anzahl der Antriebsbolzen hängt dabei vom Durchmesser des Mitnehmers 9 ab. Je kleiner dessen Durchmesser ist, desto mehr Antriebsbolzen werden benötigt. Des Weiteren hängt die Anzahl der zu verwendenden Antriebsbolzen davon ab, wie groß der Ausrückweg ist. Je länger der Ausrückweg ist, desto mehr Antriebsbolzen werden benötigt.

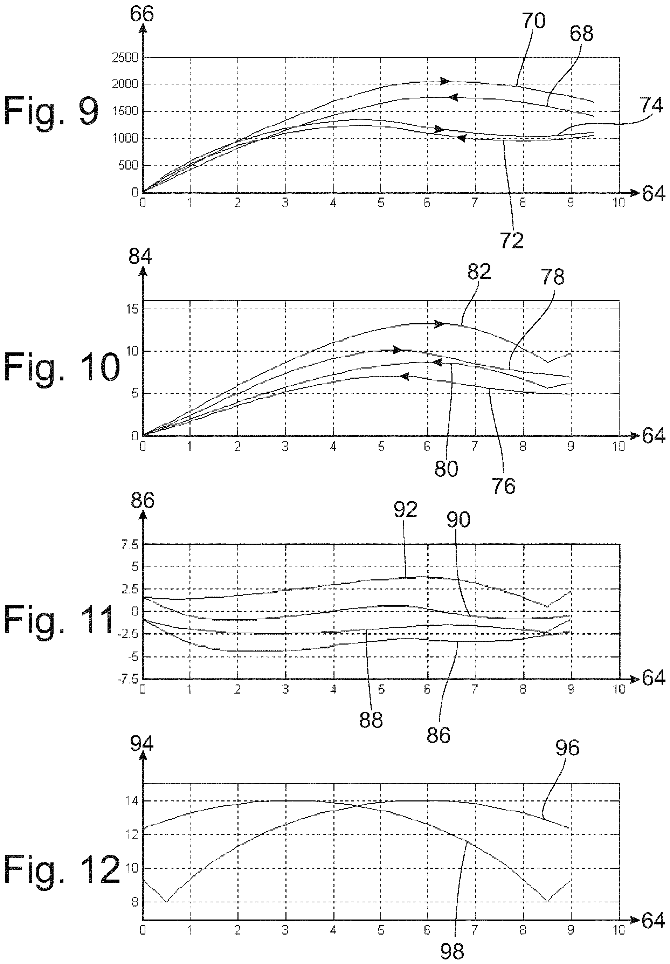

Die Figuren 9 bis 12 zeigen Kompensationskennlinien der Betätigungseinheit 1.

Figur 9 zeigt die Ausrückkraft am Ausrücklager, wobei auf der Achse 64 der Ausrückweg am Ausrücklager in Millimetern und entlang der Achse 66 die Ausrückkraft in Newton angegeben ist. Die Linien 68 und 70 beziehen sich dabei auf eine Kupplung im Neuzustand und die Linien 72 und 74 auf eine Kupplung mit verschlissener Kupplungsscheibe.

Figur 10 zeigt die entsprechenden Linien 80 und 82 für eine verschlissene und die Linien 76 und 78 für eine neue Kupplung. Dabei ist auf der Achse 84 das eingeleitete Drehmoment aufgezeichnet. Wie man erkennt, sind bei einer neuen Kupplung die Kräfte sowohl in Ausrück- als auch in Einrückrichtung niedriger als bei einer verschlissenen Kupplung.

Bei Figur 11 ist auf der Achse 86 das Kompensationsmoment in Newtonmetern gegen den Ausrückweg auf Achse 64 aufgetragen. Die Linien 86 und 90 zeigen dabei das Kompensationsmoment für eine neue und die Linien 88 und 92 das Kompensationsmoment für eine verschlissene Kupplung.

Der Wechsel des Hebelarms 61 ist in Figur 12 gezeigt. Auf der Achse 94 ist dabei die Hebelarmlänge in mm aufgetragen, wobei die Achse 94 nicht bei 0 beginnt. Die Linie 96 zeigt dabei die Hebelarmlänge für eine neue Kupplung und die Linie 98 die Hebelarmlänge für eine verschlissene Kupplung. Man kann erkennen, dass die Hebelarmlänge bei kleinen Ausrückwegen kleiner ist als bei einer verschlissenen Kupplung und dementsprechend zu Beginn der Ausrückbewegung wenig Kraft übertragen wird. Demgegenüber ist der Kraftübertrag bei größeren Ausrückwegen größer als bei einer verschlissenen Kupplung.

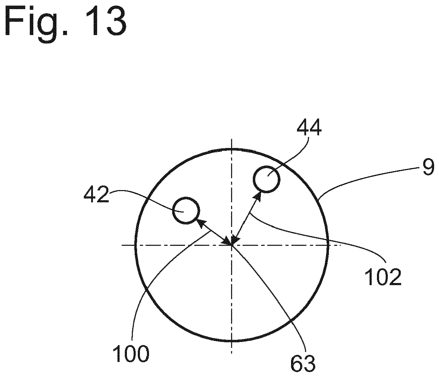

Figur 13 zeigt eine alternative Anordnung des Mitnehmers 9. Bei diesem sind die Abstände 100 und 102 der Antriebsbolzen 42 und 44 von der Drehachse 63 unterschiedlich. Dadurch ist der mit dem Antriebsbolzen 42 erzeugbare Hebelarm weiter von der Drehstellung des Mitnehmers 9 zum Stößel 5 abhängig, der maximale Hebelarm ist aber kleiner als der mit dem Antriebsbolzen 44 maximale erzeugbare Hebelarm.

Durch die beschriebene Betätigungseinheit 1 wird der Abstand der Ausrückkraftkennlinien zwischen neuem und verschlissenem Zustand der Kupplung und damit die Spreizung des Kompensationsmomentes verringert. Somit wird die Belastung des Elektromotors sowohl im Neuzustand wie auch im verschlissenen Zustand verringert.

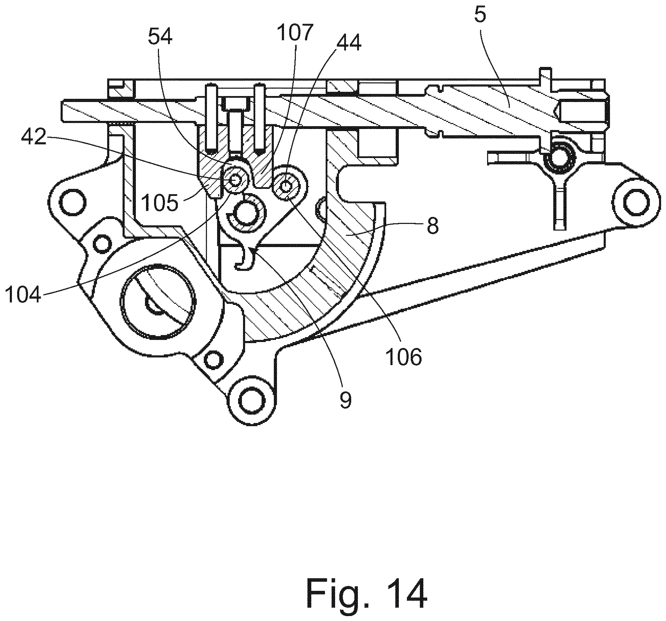

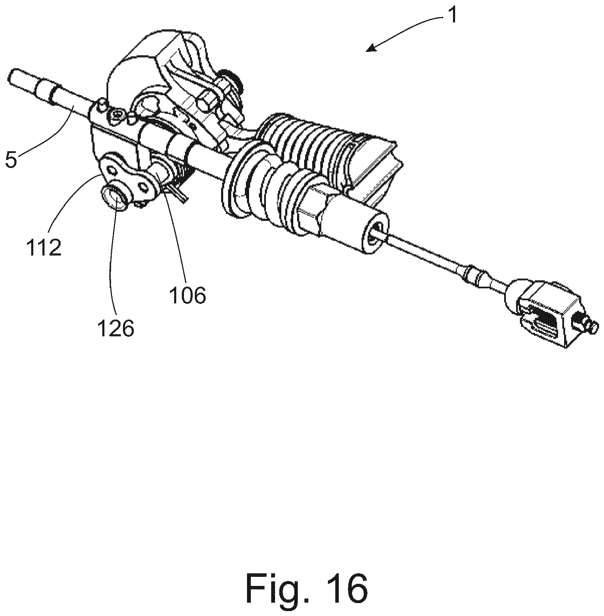

Figur 14 zeigt die Betätigungseinrichtung 1 in einer Seitenansicht. Dabei sind der Mitnehmer 9 sowie der Stößel 5 abgewandelt worden. Diese Abwandlungen sind unabhängig voneinander, insbesondere kann der Stößel 5 wie in den Figuren 14 und 16 gezeigt mit dem Mitnehmer 9 nach den vorhergehenden Figuren kombiniert werden und der Mitnehmer 9 nach den Figuren 14 bis 17 mit einem Stößel nach den vorhergehenden Figuren.

In Figur 14 sind die Rollen 104 und 106 als Ummantelung der Bolzen 42 und 44 auch zeichnerisch dargestellt. Wie bereits ausgeführt liegt eine Ummantelung der Bolzen auch in den Ausführungsformen der vorhergehenden Figuren vor, auch wenn dies zeichnerisch nicht hervorgehoben ist.

Der Stößel 5 weist zwei Finger 105 und 107 auf, die mit den Bolzen 42 und 44 in Eingriff stehen. Die genaue Anzahl ist nicht relevant, die Anzahl der Bolzen und die der Finger stimmt aber überein.

Die Rollen 104 und 106 ummanteln die Bolzen 42 und 44 und verringern so die Belastung zwischen dem Getriebe 3 und dem Stößel 5, indem die Belastung zwischen dem Getriebe 3 bzw. seinem Verbindungselement 9 und dort bei den Bolzen 42 und 44 durch die Rollen 104 und 106 aufgeteilt wird, indem die bei Kontakt mit den Bolzen 42 und 44 vorhandene Gleitreibung mittels der Rollen 104 und 106 in eine Rollreibung umgewandelt wird. Die Gleitreibung liegt dann zwischen den Bolzen 42 und 44 und der jeweiligen Rolle 104 und 106 vor. Dadurch kann aber der Verschleiß am Stößel 5 minimiert werden.

Die Rollen 104 und 106 sind aus Stahl. Die Rollen 104 und 106 können auch am Innendurchmesser auch mit Gleitlagerbuchsen versehen werden. Diese sind bevorzugt als eingepresste Glacierbuchse ausgebildet. Mit Gleitlagern kann die Gleitreibung zwischen Bolzen 42 und 44 und dem jeweiligen Mantelelement verringert werden.

Das Verbindungselement 9 umfasst ein an einer Welle des Getriebes 3 fixiertes Halteblech 110. Das Halteblech 110 hat eine herzförmige Grundform und ist an der Herzspitze an der Welle fixiert. Die Bolzen 42 und 44 sind beabstandet zur Drehachse der Welle sowie des Halteblechs 110 angeordnet.

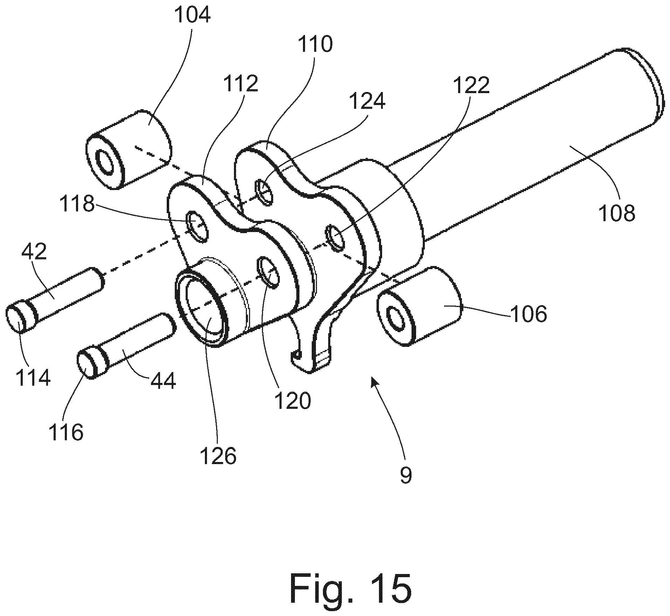

Eine alternative Ausgestaltung des Verbindungselementes 9 ist in Figur 15 gezeigt. Dabei sind zwei Haltebleche 110 und 112 an der Welle 108 fixiert. Die Haltebleche 110 und 112 sind beabstandet und stützen jeweils ein Ende der Bolzen 42 und 44. Die Bolzen 42 und 44 umfassen jeweils eine Kopf 114 und 116 als Anschlag für das Halteblech 112, also das außen liegende Halteblech. Zum Abstützen der Bolzen 42 und 44 weisen die Haltebleche 110 und 112 bevorzugt die Ausnehmungen 118, 120, 122 und 124 auf. Die Bolzen 42 und 44 können alternativ auch an den Halteblechen 110 und 112 festgeschweißt sein. So kann verhindert werden, dass der Stößel 5 als Hebel die Bolzen 42 und 44 verbiegt.

Figur 16 zeigt das Verbindungselement 9 im montierten Zustand in einer perspektivischen Ansicht. Die Bolzen 42 und 44 stehen mit den Fingern 105 und 107 in Eingriff und verschieben so den Stößel 5 linear. Das Halteblech 112 stützt die Bolzen 42 und 44 nach außen hin ab. Dabei ist das Halteblech 112 an der Herzspitze 126 an der Welle 108 befestigt.

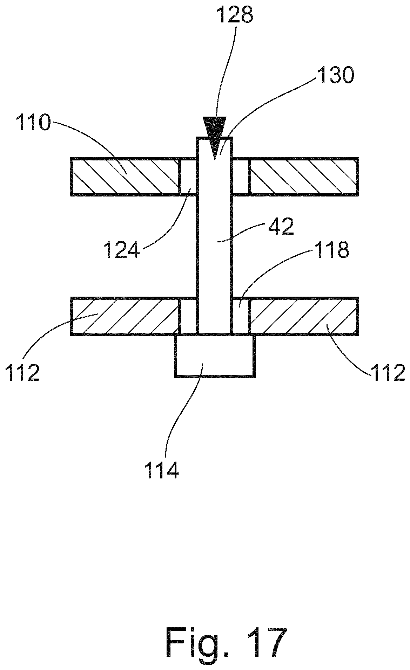

Figur 17 zeigt eine alternative Befestigungsmöglichkeit für die Bolzen 42 und 44. Dabei wird der Bolzen 42 mit einem Keil 128 am freien Ende 128 aufgetulpt. Dadurch wird das freie Ende 130 aufgeweitet, wodurch der Bolzen 42 nicht mehr durch die Öffnung 124 bewegt werden kann.

### Bezugszeichen

- 1: Betätigungseinheit
- 2: Elektromotor
- 3: Übertragungseinheit
- 4: Kompensationsfedereinheit
- 5: Stößel
- 6: Vorlastfeder
- 7: Anschlagfeder
- 8: Zahnradsegment
- 9: Mitnehmer
- 10: Schlingfeder
- 12: Gelenklager
- 14: Federführung
- 16: Kompensationsfeder
- 18: Gehäuse
- 20: Deckel
- 22: Stirnradverzahnung
- 24: Drehachse
- 26: Anschlag
- 28: Anschlag
- 30: Lagerbolzen
- 32: Ringwandung
- 34: seitliches Ende
- 36: seitliches Ende
- 37: Nut
- 38: Grundkörper
- 40: Ausnehmung
- 42: Antriebsbolzen
- 44: Antriebsbolzen
- 46: Lagerabschnitt
- 48: Lagerabschnitt
- 50: Mittelabschnitt
- 52: Ausnehmung
- 54: Ausnehmung
- 56: Ausnehmung
- 58: Versteifungsabschnitt
- 60: Markierung
- 62: Pfeil
- 64: Achse
- 66: Achse
- 68: Linie
- 70: Linie
- 72: Linie
- 74: Linie
- 76: Linie
- 78: Linie
- 80: Linie
- 82: Linie
- 84: Achse
- 86: Linie
- 88: Linie
- 90: Linie
- 92: Linie
- 94: Achse
- 96: Linie
- 98: Linie
- 100: Abstand
- 102: Abstand
- 104: Rolle
- 105: Finger
- 106: Rolle
- 107: Finger
- 108: Welle
- 110: Halteblech
- 112: Halteblech
- 114: Kopf
- 116: Kopf
- 118: Ausnehmung
- 120: Ausnehmung
- 122: Ausnehmung
- 124: Ausnehmung
- 126: Herzspitze
- 128: Keil
- 130: freies Ende

## Patentansprüche

1. Betätigungseinheit (1) für eine Kupplung umfassend eine Antriebseinheit (2), ein Betätigungselement (5) zum Betätigen der Kupplung und ein Getriebe (3) zum Übertragen eines durch die Antriebseinheit (2) erzeugten Drehmomentes auf das Betätigungselement (5), wobei das Getriebe (3) wenigstens einen Bolzen (42, 44) zum Angreifen am Betätigungselement (5) aufweist, wobei der Bolzen (42, 44) wenigstens teilweise mit einer Ummantelung versehen ist, **dadurch gekennzeichnet, dass** der wenigstens eine Bolzen (42, 44) an einem flächigen Trägerelement (110,112) befestigt ist und zwei Bolzen (42, 44) vorgesehen sind, die von der Drehachse des Trägerelementes (110, 112) unterschiedlich beabstandet sind.

2. Betätigungseinheit nach Anspruch 1, **dadurch gekennzeichnet, dass** die Ummantelung als Mantelelement ausgebildet ist.

3. Betätigungseinheit nach Anspruch 2, **dadurch gekennzeichnet, dass** das Mantelelement als hohlzylindrische Rolle (104, 106) ausgebildet ist.

4. Betätigungseinheit nach Anspruch 3, **dadurch gekennzeichnet, dass** die Rolle (104, 106) aus Stahl ist.

5. Betätigungseinheit nach Anspruch 2, **dadurch gekennzeichnet, dass** das Mantelelement als Gleitlager ausgebildet ist.

6. Betätigungseinheit nach Anspruch 5, **dadurch gekennzeichnet, dass** das Gleitlager aus einer äußeren Rolle und einer in die Rolle eingepressten Glacierbuchse besteht.

7. Betätigungseinheit nach einem der vorangehenden Ansprüche, **dadurch gekennzeichnet, dass** der wenigstens eine Bolzen (42, 44) beidseitig abgestützt ist.

8. Betätigungseinheit nach einem der vorangehenden Ansprüche, **dadurch gekennzeichnet, dass** an einem Ende einer Welle (108) des Getriebes (3) zwei Trägerelemente, insbesondere Haltebleche (110, 112), zum beidseitigen Stützen des wenigstens einen Bolzens (42, 44) fixiert sind.

9. Betätigungseinheit nach einem der vorangehenden Ansprüche, **dadurch gekennzeichnet, dass** der wenigstens eine Bolzen (42, 44) am Getriebe (3), insbesondere einem Trägerelement, aufgetulpt ist.

10. Betätigungseinheit nach einem der vorangehenden Ansprüche, **dadurch gekennzeichnet, dass** der wenigstens eine Bolzen (42, 44) an einem Ende einen Kopf (114, 116) aufweist, der ein Axialanschlag für das Mantelelement oder ein Trägerelement ist.

11. Betätigungseinheit nach einem der vorangehenden Ansprüche, **dadurch gekennzeichnet, dass** das Getriebe (3) einen Verschleißausgleichsmechanismus (10) umfasst, durch den die Einrückposition des Betätigungselementes (5) an den Verschleißzustand der Kupplung anpassbar ist, wobei sich der Hebelarm zwischen dem Getriebe (3) und dem Betätigungselement (5) mit Wechsel der Einrückposition aufgrund einer Verschleißausgleichsanpassung vergrößert.

12. Betätigungseinheit nach Anspruch 10, **dadurch gekennzeichnet, dass** das Getriebe (3) das Betätigungselement (5) mittels des Bolzens (42, 44) an einer Angriffsposition angreift, die während der Drehbewegung des Bolzens (42, 44) veränderbar ist.

13. Kraftfahrzeug mit einer Betätigungseinheit (1) zum Betätigen einer Kupplung, wobei die Betätigungseinheit (1) nach einem der vorangehenden Ansprüche ausgebildet ist.

## Claims

1. Actuating unit (1) for a clutch comprising a drive unit (2), an actuating element (5) for actuating the clutch, and a transmission (3) for transmitting a torque which is generated by way of the drive unit (2) to the actuating element (5), the transmission (3) having at least one pin (42, 44) for acting on the actuating element (5), the pin (42, 44) being provided at least partially with a covering, **characterized in that** the at least one pin (42, 44) is fixed to a flat carrier element (110, 112) and two pins (42, 44) are provided which are spaced apart differently from the rotational axis of the carrier element (110, 112).

2. Actuating unit according to Claim 1, **characterized in that** the covering is configured as a sheath element.

3. Actuating unit according to Claim 2, **characterized in that** the sheath element is configured as a hollow-cylindrical roller (104, 106).

4. Actuating unit according to Claim 3, **characterized in that** the roller (104, 106) is made from steel.

5. Actuating unit according to Claim 2, **characterized in that** the sheath element is configured as a plain bearing.

6. Actuating unit according to Claim 5, **characterized in that** the plain bearing consists of an outer roller and a Glacier bush which is pressed into the roller.

7. Actuating unit according to one of the preceding claims, **characterized in that** the at least one pin (42, 44) is supported on both sides.

8. Actuating unit according to one of the preceding claims, **characterized in that** two carrier parts, in particular retaining plates (110, 112), for supporting the at least one pin (42, 44) on both sides are fixed at one end of a shaft (108) of the transmission (3).

9. Actuating unit according to one of the preceding claims, **characterized in that** the at least one pin (42, 44) is flared on the transmission (3), in particular a carrier element.

10. Actuating unit according to one of the preceding claims, **characterized in that** the at least one pin (42, 44) has a head (114, 116) at one end, which head (114, 116) is an axial stop for the sheath element or a carrier element.

11. Actuating unit according to one of the preceding claims, **characterized in that** the transmission (3) comprises a wear compensation mechanism (10), by way of which the engaged position of the actuating element (5) can be adapted to the wear state of the clutch, the lever arm between the transmission (3) and the actuating element (5) increasing with a change in the engaged position on account of the wear compensation adaptation.

12. Actuating unit according to Claim 10, **characterized in that** the transmission (3) acts on the actuating element (5) by means of the pin (42, 44) at an acting position which can be changed during the rotational movement of the pin (42, 44).

13. Motor vehicle having an actuating unit (1) for actuating a clutch, the actuating unit (1) being configured according to one of the preceding claims.

## Revendications

1. Unité d'actionnement (1) pour un embrayage, comprenant une unité d'entraînement(2), un élément d'actionnement (5) pour actionner l'embrayage et une transmission (3) pour transmettre un couple généré par l'unité d'entraînement (2) à l'élément d'actionnement (5), la transmission (3) présentant au moins un boulon (42, 44) pour l'engagement avec un élément d'actionnement (5), le boulon (42, 44) étant pourvu au moins en partie d'une gaine, **caractérisée en ce que** l'au moins un boulon (42, 44) est fixé à un élément de support (110, 112) plat et deux boulons (42, 44) sont prévus, lesquels sont espacés de manière différente de l'axe de rotation de l'élément de support (110, 112) .

2. Unité d'actionnement selon la revendication 1, **caractérisée en ce que** la gaine est réalisée sous forme d'élément d'enveloppe.

3. Unité d'actionnement selon la revendication 2, **caractérisée en ce que** l'élément d'enveloppe est réalisé sous forme de rouleau cylindrique creux (104, 106) .

4. Unité d'actionnement selon la revendication 3, **caractérisée en ce que** le rouleau (104, 106) est en acier.

5. Unité d'actionnement selon la revendication 2, **caractérisée en ce que** l'élément d'enveloppe est réalisé sous forme de palier lisse.

6. Unité d'actionnement selon la revendication 5, **caractérisée en ce que** le palier lisse se compose d'un rouleau extérieur et d'une douille Glacier enfoncée par pressage dans le rouleau.

7. Unité d'actionnement selon l'une quelconque des revendications précédentes, **caractérisée en ce que** l'au moins un boulon (42, 44) est supporté des deux côtés.

8. Unité d'actionnement selon l'une quelconque des revendications précédentes, **caractérisée en ce qu'**à une extrémité d'un arbre (108) de la transmission (3) sont fixées deux parties de support, en particulier des tôles de retenue (110, 112) pour le support bilatéral de l'au moins un boulon (42, 44).

9. Unité d'actionnement selon l'une quelconque des revendications précédentes, **caractérisée en ce que** l'au moins un boulon (42, 44) est enfoncé sur la transmission (3), en particulier sur un élément de support.

10. Unité d'actionnement selon l'une quelconque des revendications précédentes, **caractérisée en ce que** l'au moins un boulon (42, 44) présente à une extrémité une tête (114, 116) qui est une butée axiale pour l'élément d'enveloppe ou un élément de support.

11. Unité d'actionnement selon l'une quelconque des revendications précédentes, **caractérisée en ce que** la transmission (3) comprend un mécanisme de compensation d'usure (10) par le biais duquel la position d'embrayage de l'élément d'actionnement (5) peut être adaptée à l'état d'usure de l'embrayage, le bras de levier entre la transmission (3) et l'élément d'actionnement (5) augmentant avec le changement de la position d'embrayage sur la base d'une adaptation de compensation d'usure.

12. Unité d'actionnement selon la revendication 10, **caractérisée en ce que** la transmission (3) s'engage avec l'élément d'actionnement (5) au moyen du boulon (42, 44) au niveau d'une position d'engagement qui peut être modifiée pendant le mouvement de rotation du boulon (42, 44).

13. Véhicule automobile comprenant une unité d'actionnement (1) pour l'actionnement d'un embrayage, l'unité d'actionnement (1) étant réalisée selon l'une quelconque des revendications précédentes.
